# EUROPEAN PATENT APPLICATION

(11) **EP 4 730 413 A1**
(43) Date of publication of application: **22.04.2026**
(21) Application number: 25787033.7
(22) Date of filing: 11.03.2025
(51) Int. Cl.: H01M 4/04, B05C 5/02, B05C 11/10

(54) **SECONDARY BATTERY MANUFACTURING EQUIPMENT AND METHOD FOR MANUFACTURING SECONDARY BATTERY BY USING SAME**

(30) Priority: 08.04.2024 KR 20240047183
(71) Applicant: LG Energy Solution, Ltd., Seoul 07335 (KR)
(72) Inventor: PARK, Min Gu, Daejeon 34122 (KR); KIM, Sang Min, Daejeon 34122 (KR); MOON, Young Gyu, Daejeon 34122 (KR); CHOI, Min Hyuck, Daejeon 34122 (KR)
(74) Representative: Plasseraud IP
(86) International application number: PCT/KR2025/003174
(87) International publication number: WO 2025/216441

(57) **Abstract**

A method of manufacturing a secondary battery includes turning off a circulation valve installed at a circulation pipe connecting a filter and an electrode slurry supply tank, measuring the pressure in a supply pipe connecting the electrode slurry supply tank and a die coater, measuring a pressure in the supply pipe adjacent to the supply valve, and turning on the supply valve installed at the supply pipe based on the measurement of the pressure in the supply pipe.

## Description

### [Technical Field]

The present disclosure relates to a secondary battery manufacturing facility and a method for manufacturing a secondary battery using the same. This application claims the benefit of Korean Patent Application No. 10-2024-0047183, filed on April 8, 2024, the disclosure of which is incorporated herein by reference.

### [Background]

Unlike primary batteries, secondary batteries can be charged and discharged a plurality of times. Secondary batteries are widely used as an energy source for various wireless devices such as handsets, laptops, and cordless vacuum cleaners. In recent years, the main use of secondary batteries has shifted from mobile devices to mobility, as the manufacturing cost per unit capacity of secondary batteries has decreased dramatically due to improved energy density and economies of scale, and the range of battery electric vehicles (BEVs) has increased to be on par with fuel vehicles.

Secondary batteries are manufactured through electrode processes, assembly processes, and activation processes. Among them, the electrode process is the most critical process in determining the yield and performance of the battery cell. The electrode process can include mixing process, coating process, roll-pressing process, and slitting process. In the mixing process, an electrode slurry including an active material, a conductive material, and a binder may be provided. In the coating process, an active material and an insulating material may be applied on the surface of the current collector. In the roll-pressing process, the electrodes may be pressed by rolls. The roll-pressing process can determine the density, performance, and surface quality of the electrode. In the slitting process, the electrode may be cut into a plurality of electrodes according to a battery cell design.

### [Summary]

### [Technical Problem]

The problem addressed by the technical ideas of the present disclosure is to provide a secondary battery manufacturing facility with increased productivity and a method for manufacturing secondary batteries using the facility.

### [Technical Solution]

According to exemplary embodiments of the present disclosure to address the above problems, a method for manufacturing a secondary battery is provided. The method includes: turning off a circulation valve installed at a circulation pipe connecting a filter and an electrode slurry supply tank; and measuring the pressure in a supply pipe connecting the electrode slurry supply tank and a die coater; measuring a pressure in the supply pipe adjacent to the supply valve; and turning on a supply pipe installed at the supply valve based on the measurement of the pressure in the supply pipe.

Turning on the supply valve includes comparing the measurement of the pressure in the supply pipe with a critical pressure.

The critical pressure is equal to a steady state pressure of the supply pipe.

The critical pressure is different from a steady state pressure of the supply pipe.

The critical pressure is greater than the steady state pressure.

The critical pressure is smaller than the steady state pressure.

The critical pressure is more than or equal to 70% of the steady state pressure, and the critical pressure is less than or equal to 80% of the steady state pressure.

A distance between the filter and the circulation valve is smaller than a distance between the filter and the supply valve.

The circulation pipe connects the branch pipe with the electrode slurry supply tank, and the supply pipe connects the branch pipe and the die coater.

The pressure in the supply pipe is measured by a pressure gauge installed at the supply valve, and the pressure gauge is adjacent to the die coater.

A length of the supply pipe between the pressure gauge and the die coater is shorter than a length of the supply valve between the pressure gauge and the branch pipe.

According to exemplary embodiments, a secondary battery manufacturing facility is provided. The facility includes: an electrode slurry supply tank configured to store an electrode slurry; a filter configured to filter an electrode slurry flowing from the electrode slurry supply tank; a die coater configured to apply the electrode slurry onto an electrode current collector; a first supply pipe connecting the electrode slurry supply tank and the filter; a second supply pipe connecting the filter with a branch pipe; a third supply pipe connecting the branch pipe and the die coater; a circulation pipe connecting the branch pipe and the electrode slurry supply tank; a pressure gauge installed at the third supply pipe and configured to measure pressure in the third supply pipe; a supply valve installed at the third supply pipe and configured to allow or block flow of the electrode slurry through the third supply pipe; a circulation valve installed at the circulation pipe, and configured to allow or block the flow of the electrode slurry through the circulation pipe; and a controller configured to generate a signal for turning on the supply valve based on a measurement of the pressure.

The pressure gauge is adjacent to the die coater.

A length of the supply pipe between the pressure gauge and the die coater is shorter than a length of the supply valve between the pressure gauge and the branch pipe.

The controller is configured to compare the measurement of the pressure with a critical pressure, and the controller is configured to generate the signal for turning on the supply valve if the measurement of the pressure is greater than equal to the critical pressure.

The critical pressure is different from a steady state pressure in the supply pipe.

The critical pressure is less than a steady state pressure in the supply pipe.

The critical pressure is more than or equal to 70% of the steady state pressure, and the critical pressure is less than or equal to 80% of the steady state pressure.

### [Advantageous Effects]

According to exemplary embodiments of the present disclosure, a supply valve can be turned on based on a measurement of the pressure in a portion of the supply pipe adjacent to the die coater. Accordingly, when the pressure in the supply pipe is within a suitable numerical range, the electrode slurry may be supplied, and the yield of the coating process can be increased.

The effects that may be obtained from the exemplary embodiments of the present disclosure are not limited to those mentioned above, and other effects not mentioned may be clearly derived and understood by one of ordinary skill in the art to which the exemplary embodiments of the present disclosure belong from the following description. That is, unintended effects of practicing the exemplary embodiments of the present disclosure may also be derived from the exemplary embodiments of the present disclosure by one of ordinary skill in the art.

### [Brief Description of the Drawings]

FIG. 1 illustrates a secondary battery manufacturing facility according to exemplary embodiments.
FIGS. 2 and 3 are flowcharts to illustrate a method of manufacturing a secondary battery according to exemplary embodiments.

### [Best Mode for Carrying out the Invention]

Hereinafter, preferred embodiments of the present disclosure will be described in detail with reference to the accompanying drawings. It should be noted that the terms and words used in this specification and claims are not to be construed in their ordinary or dictionary sense, but rather in a sense and concept consistent with the technical idea of the disclosure, based on the principle that the inventor may define the concept of a term as he sees fit to best describe his disclosure.

Accordingly, it is to be understood that the embodiments described herein and the configurations shown in the drawings are only the most preferred embodiments of the disclosure and are not exhaustive of the technical ideas of the disclosure, and that there may be various equivalents and modifications that may be substituted for them at the time of filing.

Furthermore, in describing the present disclosure, specific descriptions of related known configurations or features are omitted where it is deemed that such detailed description would obscure the essence of the disclosure.

Because the embodiments of the present disclosure are provided to more fully explain the disclosure to those of ordinary skill in the art, the shapes and sizes of components in the drawings may be exaggerated, omitted, or shown schematically for clarity. Accordingly, the size or proportion of each component is not necessarily indicative of its actual size or proportion.

Furthermore, when an element is the to be connected to another element, it is not limited to being in direct physical contact with it, but may include additional connecting elements interposed in the middle. In other words, connections as used herein may include indirect connections as well as direct connections, unless otherwise noted. For example, if elements A and B are connected to each other, there may be element C provided between elements A and C that is connected to each of elements A and C.

### (First embodiment)

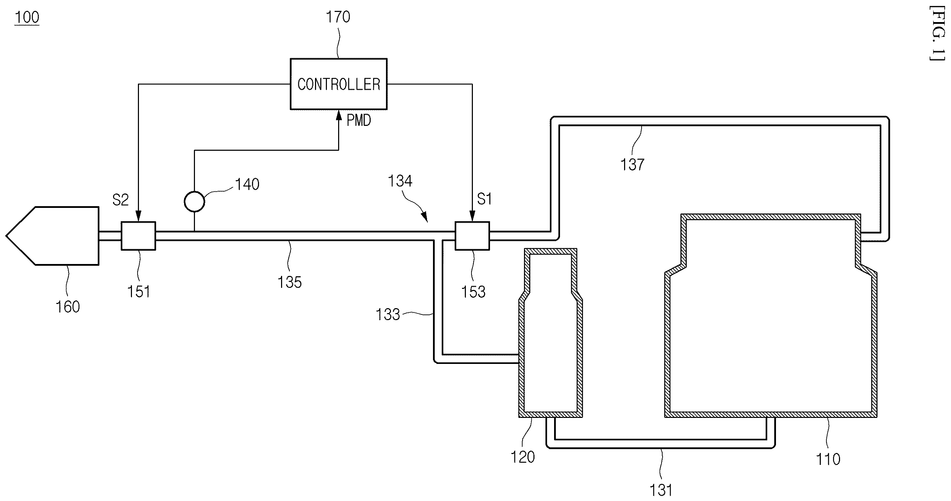

FIG. 1 illustrates a secondary battery manufacturing facility 100, according to exemplary embodiments.

Referring to FIG. 1, the secondary battery manufacturing facility 100 may include an electrode slurry supply tank 110, a filter 120, supply pipes 131, 133, 135, a branch pipe 134, a circulation pipe 137, a pressure gauge 140, a supply valve 151, a circulation valve 153, a die coater 160, and a controller 170.

According to exemplary embodiments, the secondary battery manufacturing facility 100 may be configured to perform a process for manufacturing secondary batteries. The secondary battery manufacturing facility 100 may be an electrode slurry supply system. The secondary battery manufacturing facility 100 may be configured to perform a coating process to apply a negative electrode slurry or positive electrode slurry onto an electrode.

The secondary battery manufacturing facility 100 may further include a mixer. The mixer may be configured to perform a mixing process. The mixing process may include a premixing process in which the binder and/or the conductive material is dissolved in a solvent prior to being introduced into the main mixer, and a main mixing process in which the active material, the conductive material, and the binder are finally mixed to provide an electrode slurry.

The electrode slurry can then be used in the coating process of the secondary battery. The electrode slurry can include an electrode active material, a conductive material, a binder, and a solvent. By dissolving the electrode active material, conductive material, and binder in a solvent, the electrode slurry may be prepared. The solvent can disperse the electrode active material binder and the conductive material. The solvent may be an aqueous solvent or a nonaqueous solvent. The solvent may include any one of dimethyl sulfoxide (DMSO), isopropyl alcohol, N-methylpyrrolidone (NMP), acetone, water, and mixtures thereof. The amount of solvent used may be determined based on a target viscosity of the electrode slurry. Parameters that determine the amount of solvent used include application thickness, manufacturing yield, and workability of the electrode slurry.

A positive electrode active material is a material that can cause an electrochemical reaction. The positive electrode active material may be a lithium transition metal oxide. The positive electrode active material may be, for example, a layered compound such as lithium cobalt oxide (LiCoO₂) and lithium nickel oxide (LiNiO₂) substituted with one or more transition metals, a lithium manganese oxide substituted with one or more transition metals, a lithium nickel-based oxide represented by the formula LiNi_{1-y}M_{y}O₂ (where M is any one of Co, Mn, Al, Cu, Fe, Mg, B, Cr, Zn, and Ga, and 0.01≤y≤0.7), a lithium nickel cobalt manganese complex oxide represented by the formula Li_{1+z}Ni_{b}Mn_{c}Co_{1-(b+c+d)}M_{d}O₍₂₋ₑ₎Aₑ, such as Li_{1+z}Ni_{1/3}Co_{1/3}Mn_{1/3}O₂, Li_{1+zN}i_{0.4}Mn_{0.4}Co_{0.2}O₂ (where -0.5≤z≤0.5, 0.1≤b≤0.8, 0.1≤c≤0.8, 0≤d≤0.2, 0≤e≤0.2, b+c+d<1 , M is any one of Al, Mg, Cr, Ti, Si, and Y, A is any one of F, P, and Cl), and an olivine-based lithium metal phosphate represented by the formula Li₁₊ₓM_{1-y}M'_{y}PO_{4-z}X_{z} (where M is a transition metal, more specifically any one of Fe, Mn, Co, and Ni; M' is any one of Al, Mg, and Ti; X is any one of F, S, and N; -0.5≤x≤+0.5, 0≤y≤0.5, and 0≤z≤0.1).

A negative electrode active material may include carbon, such as, for example, anthracite, graphitized carbon, or graphitized carbon. The negative electrode active material may include, for example, metal complex oxides such as LiₓFe₂O_{3 (}0≤x≤1), LixWO_{2 (}0≤x≤1), SnₓMe₁₋ₓMe'_{y}O_{z} (where Me is any one of Mn, Fe, Pb, and Ge, Me' is any one of Al, B, P, Si, one, two, or three elements of the periodic table, and halogens, and 0<x≤1 , 1≤y≤3 , and 1≤z≤8). The negative electrode active material may include any one among, for example, a lithium metal, a lithium alloy, a silicon-based alloy, and a tin-based alloy. The negative electrode active material may include a metal oxide, such as, for example, SnO, SnO₂, PbO, PbO₂, Pb₂O₃, Pb₃O₄, Sb₂O₃, Sb₂O₄, Sb₂O₅, GeO, GeO₂, Bi₂O₃, Bi₂O₄, and Bi₂O₅. The negative electrode active material, for example, may also include a conductive polymer, such as polyacetylene, or a Li-Co-Ni based material.

A conductive material may be conductive without causing chemical changes in the final manufactured secondary battery. The conductive materials may include, for example, graphite, such as natural or artificial graphite; carbon black, such as acetylene black, ketjen black, channel black, furnace black, lamp black, and summer black; conductive fibers, such as carbon fiber or metal fiber; carbon fluoride; metal powders, such as aluminum, nickel powder; conductive whiskey, such as zinc oxide, potassium titanate; conductive metal oxides, such as titanium oxide; polyphenylene derivatives; and the like.

A binder may enhance the coupling between the active material and the conductive material and the coupling to the current collector. The binder may include, for example, polyvinylidene fluoride, polyvinyl alcohol, carboxymethyl cellulose (CMC), starch, hydroxypropyl cellulose, regenerated cellulose, polyvinylpyrrolidone, tetrafluoroethylene, polyethylene, polypropylene, ethylene-propylene-diene terpolymer (EPDM), sulfonated EPDM, styrene-butylene rubber, fluororubber, various copolymers, and the like.

The electrode slurry supply tank 110 may be configured to store electrode slurry. The electrode slurry supply tank 110 may be configured to supply to the die coater 160. The electrode slurry supply tank 110 may include a stirrer configured to stir the electrode slurry. The action of the stirrer may maintain physical properties of the electrode slurry, such as viscosity. The electrode slurry supply tank 110 may include an injecting pipe into which the electrode slurry is introduced. The injecting pipe may include, but is not limited to, a metering pipe.

A supply pipe 131 may connect the electrode slurry supply tank 110 and the filter 120. The supply pipe 131 may be connected to each of the electrode slurry supply tank 110 and the filter 120. The electrode slurry inside the electrode slurry supply tank 110 may be delivered to the filter 120 via the supply pipe 131. The filter 120 may be configured to remove impurities from the electrode slurry, or to block a portion of the electrode slurry based on particle size. Reliability and uniformity of the coating process may be provided by the operation of the filter 120.

The supply pipe 133 may connect the filter 120 and a branch pipe 134. The electrode slurry that has passed through the filter 120 may be delivered to the branch pipe 134 via the supply pipe 133. The branch pipe 134 may be a 3-WAY pipe. The branch pipe 134 may be connected to each of the supply pipes 133, 135 and the circulation pipe 137. Accordingly, electrode slurry flowing through the supply pipe 133 may flow into the supply pipe 135 or may flow into the circulation pipe 137.

The supply pipe 135 may be connected to the branch pipe 134 and the die coater 160. The die coater 160 may be supplied with electrode slurry stored in the electrode slurry storage tank 110 via the supply pipe 135 and may be configured to perform a coating process.

More specifically, the coating process may include applying an electrode slurry including an electrode active material on the collector, drying, and rolling to form an electrode composite layer. The die coater 160 may be, for example, a slot die. The electrode current collector may be a positive electrode current collector or a negative electrode current collector, and the electrode active material may be a positive electrode active material or a negative electrode active material.

The thickness of the positive electrode current collector ranges from about 3 *µ*m to about 500 *µ*m. The positive electrode current collector may not cause chemical changes in the secondary battery that is ultimately manufactured, and may have a high conductivity. The positive electrode current collector may include, for example, any one of stainless steel, aluminum, nickel, titanium, calcined carbon, and aluminum. The positive electrode current collector may also include stainless steel, for example, surface treated with carbon, nickel, titanium, and silver. The surface of the positive electrode current collector may include a micro-irregular structure to increase adhesion of the active material. The shape of the positive electrode current collector may include any of the following: film, sheet, foil, net, porous, foam, and nonwoven.

The thickness of the negative electrode current collector ranges from about 3 *µ*m to about 500 *µ*m. The negative electrode current collector may have a high conductivity and may not cause chemical changes in the final manufactured secondary battery. The negative electrode current collector may include any one of copper, stainless steel, aluminum, nickel, titanium, calcined carbon, and aluminum-cadmium alloys. The negative electrode current collector may also include stainless steel whose surface is treated with carbon, nickel, titanium, and silver. The surface of the negative electrode current collector may include a micro-irregular structure to increase adhesion of the active material. The shape of the negative electrode current collector may include any of the following: film, sheet, foil, net, porous, foam, and nonwoven.

The circulation pipe 137 may be connected to the branch pipe 134 and the electrode slurry supply tank 110. Accordingly, when the secondary battery manufacturing facility is in circulation mode, the electrode slurry may circulate between the electrode slurry supply tank 110 and the filter 120 via the supply pipe 131, 133 and the circulation pipe 137, thereby preventing deterioration of properties of the electrode slurry, such as viscosity, etc.

A pressure gauge 140 may be installed at the supply pipe 135. The pressure gauge 140 may be configured to measure the pressure inside the supply pipe 135. The pressure gauge 140 may be adjacent to the die coater 160. Accordingly, the pressure in the portion of the supply pipe 135 adjacent to the die coater 160 may be monitored, and a pressure similar to the pressure applied to the die coater 160 may be monitored, thereby increasing the reliability of pressure-based supply control.

According to exemplary embodiments, the length of the supply pipe 135 between the pressure gauge 140 and the die coater 160 may be different from the length of the supply pipe 135 between the pressure gauge 140 and the branch pipe 134. According to exemplary embodiments, the length of the supply pipe 135 between the pressure gauge 140 and the die coater 160 may be shorter than the length of the supply pipe 135 between the pressure gauge 140 and the branch pipe 134.

The pressure gauge 140 may be a seamless pressure gauge. In a seamless pressure gauge, the seal and gauge may be welded, for example, to prevent or mitigate fluid leakage. The pressure gauge 140 may be configured to transmit measured pressure to the controller 170 based on wireless communication, but is not limited thereto. A communication line may be installed to transmit pressure data between the pressure gauge 140 and the controller 170.

The pressure gauge 140 may be configured to operate based on a preset monitoring cycle. The pressure gauge 140 may be configured to measure the pressure in the supply pipe 135 each time a monitoring cycle is reached, and transmit the measured pressure to the controller, thereby collecting pressure data (PMD).

A supply valve 151 may be installed at the supply pipe 135. The supply valve 151 may be configured to allow, or block, the flow of electrode slurry from the supply pipe 135 to the die coater 160. The supply valve 151 may be an electronic valve. The supply valve 151 may be operable based on a control signal from the controller 170. The supply valve 151 may be turned on or turned off based on a control signal from the controller 170.

A circulation valve 153 may be installed at the circulation pipe 137. The circulation valve 153 may be configured to allow, or block, the flow of electrode slurry from the circulation pipe 137 to the electrode slurry supply tank 110. The circulation valve 153 may be an electronic valve. The circulation valve 153 may be operable based on a control signal from the controller 170. The circulation valve 153 may be turned on or turned off based on a control signal from the controller 170.

The circulation valve 153 may be closer to the electrode slurry supply tank 110 and filter 120 than the supply valve 151. The distance between the circulation valve 153 and the electrode slurry supply tank 110 may be different than the distance between the supply valve 151 and the electrode slurry supply tank 110. The distance between the circulation valve 153 and the electrode slurry supply tank 110 can be smaller than the distance between the supply valve 151 and the electrode slurry supply tank 110. The distance between the circulation valve 153 and the filter 120 may be different from the distance between the supply valve 151 and the filter 120. The distance between the circulation valve 153 and the filter 120 may be smaller than the distance between the supply valve 151 and the filter 120.

The secondary battery manufacturing facility 100 may be in a supply mode, or may be in a circulation mode. The secondary battery manufacturing facility 100 may transition from a supply mode to a circulation mode, or from a circulation mode to a supply mode, based on turn on and turn off operations of the supply valve 151 and the circulation valve 153.

In the supply mode of the secondary battery manufacturing facility 100, the supply valve 151 may allow the flow of the electrode slurry through the supply pipe 135 and the circulation valve 153 may block the flow of the electrode slurry through the circulation pipe 137. Accordingly, a flow path of electrode slurry including an electrode slurry supply tank 110, supply pipe 131, filter 120, supply pipe 133, branch pipe 134, supply pipe 135, and a die coater 160 may be provided, and electrode slurry stored in the electrode slurry supply tank 110 may be provided to the die coater 160.

In the circulation mode of the secondary battery manufacturing facility 100, the supply valve 151 may block the flow of the electrode slurry through the supply pipe 135 and the circulation valve 153 may allow the flow of the electrode slurry through the circulation pipe 137. Accordingly, a circulation path for the electrode slurry may be provided that includes the electrode slurry supply tank 110, the supply pipe 131, the filter 120, the supply pipe 133, the branch pipe 134, and the circulation pipe 137. Accordingly, the electrode slurry may flow in a circular manner between the electrode slurry supply tank 110 and the filter 120.

In order for the secondary battery manufacturing facility 100 to switch from a supply mode to a circulation mode, the supply valve 151 may be turned off and the circulation valve 153 may be turned on. To transition the secondary battery manufacturing facility 100 from the circulation mode to the supply mode, the circulation valve 153 may be turned off, and the supply valve 151 may be turned on.

The controller 170 may be configured to generate signals to control various elements of the secondary battery manufacturing facility 100, including the supply valve 151 and the circulation valve 153, based on user operation or a predetermined recipe. The controller 170 may be configured to receive pressure data measured by the pressure gauge 140. The controller 170 may be configured to generate signals to control the supply valve 151 based on the pressure data.

The controller 170 may be a programmable logic controller (PLC). A PLC is a specialized form of microprocessor-based controller that uses programmable memory to store instructions and instantiate functions such as logic, sequencing, timing, counting, and arithmetic to control machines and processes. PLCs are easy to operate and program.

The controller 170 may include a power supply, a CPU, input interfaces, output interfaces, communication interfaces, and memory devices. The power supply may be configured to provide power to the different elements of the controller, such as the CPU, input interfaces, output interfaces, communication interfaces, and memory devices, for operation of the controller. The memory devices may include read only memory (ROM) configured to store system programs, such as an operating system, and random access memory (RAM) configured to store user programs and data, such as status information of input and output devices, and values of timers, counters, and other internal devices. The CPU may be configured to control communication between modules that instantiate logic and convert input signals into output motion signals. The CPU may operate based on system programs and user programs stored in memory devices. The CPU may be configured to write or read inspection data and measurement data to and from data areas of the memory devices based on the system programs and user programs. Conditions or data from industrial devices and production processes may be transmitted to the CPU via an input module. The results processed by the CPU can be sent to the actuator via the output module. The communication interface may be configured to relay data to and from the controller and other network elements.

However, without limitation, the controller 170 may include any of the following: a simple controller, a complex processor such as a microprocessor, CPU, GPU, or the like, a processor configured by software, or proprietary hardware and firmware. The controller may be instantiated by, for example, a general purpose computer or application specific hardware such as a digital signal processor (DSP), field programmable gate array (FPGA), and application specific integrated circuit (ASIC).

The secondary battery manufacturing facility 10 may further include a pump. The pump may be configured to provide power for the flow and circulation of the electrode slurry in the circulation mode and the supply mode of the secondary battery manufacturing facility 100.

### (Second Embodiment)

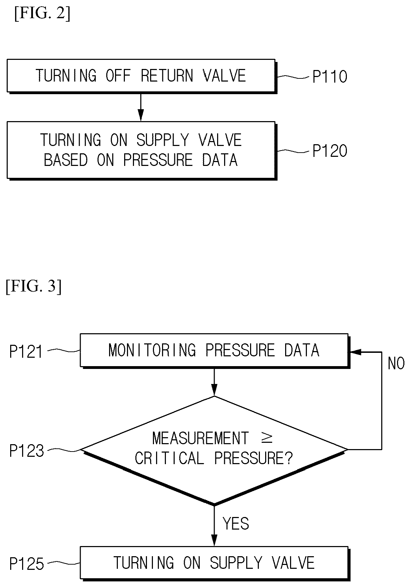

FIG. 2 is a flowchart to illustrate a method of manufacturing a secondary battery according to exemplary embodiments.

FIG. 3 is a flowchart to illustrate a method of manufacturing a secondary battery according to exemplary embodiments.

Referring to FIGS. 1 through 3, at P110, the circulation valve 153 may be turned off. The controller 170 may be configured to generate a first signal S1 for turning off the circulation valve 153, and to transmit the first signal S1 to the circulation valve 153. The circulation valve 153 may receive the first signal S1 and may be turned off based on the first signal S1. The first signal S1 may be generated based on an operator action or a preset process recipe.

Then, at P120, the supply valve 151 may be turned on based on the pressure data (PMD). If the flow of the electrode slurry through the circulation pipe 137 is blocked at P110, the electrode slurry may flow into the supply pipe 135, thereby causing the pressure in the supply pipe 135 to rise.

If the pressure inside the supply pipe 135 is too low when the supply valve 151 is turned on, the loading amount of the electrode slurry may be below the target loading amount range, or the lateral dispersion and discharge of the electrode slurry may be impeded. If the lateral dispersion and discharge of the electrode slurry is impaired, the electrode yield may be reduced due to uncoating defect of the coating part of the electrode slurry. If the pressure inside the supply pipe 135 is excessively high when the supply valve 151 is turned on, the loading amount of the electrode slurry may exceed the target loading range, or the lateral dispersion and discharge of the electrode slurry may be excessive. If the lateral dispersion and discharge of the electrode slurry is excessive, the electrode yield may be degraded due to the non-coating part coating of the electrode current collector.

According to exemplary embodiments, the controller 170 may be configured to generate a second signal S2 to turn on the supply valve 151 based on the pressure data (PMD) after the transmission of the first signal S1. Accordingly, excessively low or excessively high pressure inside the supply pipe 135 when the supply valve 151 is turned on may be prevented, and the reliability of the coating process may be improved.

Referring to FIG. 3, P120 may include monitoring the pressure data (PMD) at P121, comparing the pressure data (PMD) to a measurement of a critical pressure at P123, and turning on the supply valve 151 at P125.

The pressure data (PMD) may be collected based on a monitoring cycle, and after the circulation valve 153 is turned off, whenever the pressure data (PMD) is updated, the controller 170 may be configured to compare the updated measurement of the pressure data (PMD) to the critical pressure. If the updated measurement of the pressure data PMD is below the critical pressure, the pressure data PMD may again be monitored at P121.

If the updated measurement of the pressure data (PMD) is above the critical pressure, at P125, the controller 170 may generate a second signal S2 to turn on the supply valve 151, whereby the supply valve 151 may be turned on.

According to exemplary embodiments, the critical pressure may be determined based on a steady state pressure determined based on pressure data (PMD) of the supply mode of the secondary battery manufacturing facility 100. Here, the steady state pressure is the pressure measured by the pressure gauge 140 after a sufficient amount of time has passed since the secondary battery manufacturing facility 100 began operating in the supply mode (i.e., after the transient state has ended), which may have a constant pressure value or a range of constant pressure values.

According to exemplary embodiments, the critical pressure may be different from the steady state pressure. According to exemplary embodiments, the critical pressure may be lower than the steady state pressure. According to exemplary embodiments, the critical pressure may be in a range from about 50% to about 100% of the steady state pressure. According to exemplary embodiments, the critical pressure may be greater than about 60% of the steady state pressure. According to exemplary embodiments, the critical pressure may be greater than or equal to about 70% of the steady state pressure. According to exemplary embodiments, the critical pressure may be less than or equal to about 90% of the steady state pressure. According to exemplary embodiments, the critical pressure may be about 80% or less of the steady state pressure.

According to exemplary embodiments, since the critical pressure is within the numerical range described above relative to the steady state pressure, the duration of the transient state until the pressure within the supply pipe 135 reaches a steady state can be reduced or minimized, thereby improving the performance of the coating process.

According to other exemplary embodiments, the critical pressure may be substantially the same as the steady state pressure. According to other exemplary embodiments, the critical pressure may be higher than the steady state pressure.

The present disclosure has been described in more detail above with reference to the drawings and embodiments. However, it should be understood that the configurations shown in the drawings or embodiments described herein are only one embodiment of the disclosure and do not represent all of the technical ideas of the disclosure, and that there may be various equivalents and modifications that may be substituted for them at the time of filing the present application.

## Claims

1. A secondary battery manufacturing method comprising:
turning off a circulation valve installed at a circulation pipe connecting a filter and an electrode slurry supply tank; and
measuring the pressure in a supply pipe connecting the electrode slurry supply tank and a die coater;
measuring a pressure in the supply pipe adjacent to the supply valve; and
turning on a supply pipe installed at the supply valve based on the measurement of the pressure in the supply pipe.

2. The secondary battery manufacturing method of claim 1, wherein
turning on the supply valve comprises comparing the measurement of the pressure in the supply pipe with a critical pressure.

3. The secondary battery manufacturing method of claim 2, wherein
the critical pressure is equal to a steady state pressure of the supply pipe.

4. The secondary battery manufacturing method of claim 2, wherein
the critical pressure is different from a steady state pressure of the supply pipe.

5. The secondary battery manufacturing method of claim 4, wherein
the critical pressure is greater than the steady state pressure.

6. The secondary battery manufacturing method of claim 4, wherein
the critical pressure is smaller than the steady state pressure.

7. The secondary battery manufacturing method of claim 6, wherein
the critical pressure is more than or equal to 70% of the steady state pressure, and
the critical pressure is less than or equal to 80% of the steady state pressure.

8. The secondary battery manufacturing method of claim 1, wherein
a distance between the filter and the circulation valve is smaller than a distance between the filter and the supply valve.

9. The secondary battery manufacturing method of claim 1, wherein
the circulation pipe connects the branch pipe with the electrode slurry supply tank, and
the supply pipe connects the branch pipe and the die coater.

10. The secondary battery manufacturing method of claim 9, wherein
the pressure in the supply pipe is measured by a pressure gauge installed at the supply valve, and
the pressure gauge is adjacent to the die coater.

11. The secondary battery manufacturing method of claim 10, wherein
a length of the supply pipe between the pressure gauge and the die coater is shorter than a length of the supply valve between the pressure gauge and the branch pipe.

12. A secondary battery manufacturing facility comprising:
an electrode slurry supply tank configured to store an electrode slurry;
a filter configured to filter an electrode slurry flowing from the electrode slurry supply tank;
a die coater configured to apply the electrode slurry onto an electrode current collector;
a first supply pipe connecting the electrode slurry supply tank and the filter;
a second supply pipe connecting the filter with a branch pipe;
a third supply pipe connecting the branch pipe and the die coater;
a circulation pipe connecting the branch pipe and the electrode slurry supply tank;
a pressure gauge installed at the third supply pipe and configured to measure pressure in the third supply pipe;
a supply valve installed at the third supply pipe and configured to allow or block flow of the electrode slurry through the third supply pipe;
a circulation valve installed at the circulation pipe, and configured to allow or block the flow of the electrode slurry through the circulation pipe; and
a controller configured to generate a signal for turning on the supply valve based on a measurement of the pressure.

13. The secondary battery manufacturing facility of claim 12, wherein
the pressure gauge is adjacent to the die coater.

14. The secondary battery manufacturing facility of claim 13, wherein
a length of the supply pipe between the pressure gauge and the die coater is shorter than a length of the supply valve between the pressure gauge and the branch pipe.

15. The secondary battery manufacturing facility of claim 12, wherein
the controller is configured to compare the measurement of the pressure with a critical pressure, and
the controller is configured to generate the signal for turning on the supply valve if the measurement of the pressure is greater than equal to the critical pressure.

16. The secondary battery manufacturing facility of claim 15, wherein
the critical pressure is different from a steady state pressure in the supply pipe.

17. The secondary battery manufacturing facility of claim 15, wherein
the critical pressure is less than a steady state pressure in the supply pipe.

18. The secondary battery manufacturing facility of claim 17, wherein
the critical pressure is more than or equal to 70% of the steady state pressure, and
the critical pressure is less than or equal to 80% of the steady state pressure.
